Europäisches Patentamt

European Patent Office

Office européen des brevets

(19)

(11) Numéro de publication: **0 102 879**
**B1**

# (12) FASCICULE DE BREVET EUROPEEN

(45) Date de publication du fascicule du brevet:
18.12.85

(51) Int. Cl.⁴: **A 23 C 19/064,** A 01 J 25/16

(21) Numéro de dépôt: 83401572.9

(22) Date de dépôt: 29.07.83

(54) **Procédé et installation pour le salage des fromages.**

(30) Priorité: 03.08.82 FR 8213540

(43) Date de publication de la demande:
14.03.84 Bulletin 84/11

(45) Mention de la délivrance du brevet:
18.12.85 Bulletin 85/51

(84) Etats contractants désignés:
AT BE CH DE GB IT LI LU NL SE

(56) Documents cités:
DE - A - 1 946 637
DE - C - 863 147
FR - A - 888 550
FR - A - 1 363 226
FR - A - 2 163 647
FR - A - 2 299 817

*Le dossier contient des informations techniques
présentées postérieurement au dépôt de la demande et
ne figurant pas dans le présent fascicule.*

(73) Titulaire: **SAINT-HUBERT Industrie Laitière, 870, rue
Denis-Papin Zone Industrielle, F-54710 Ludres
Meurthe-et-Moselle (FR)**

(72) Inventeur: **Bruart, Jacques, 13, rue des Magnolias,
F-54220 Malzeville (Meurthe-et-Moselle) (FR)**
Inventeur: **Goetz, Jean Marie, HLM Languedoc,
F-54129 Magnieres (Meurthe-et-Moselle) (FR)**

(74) Mandataire: **Chevallier, Robert Marie Georges, Cabinet
BOETTCHER 23, rue La Boétie, F-75008 Paris (FR)**

## Description

L'invention a pour objet un procédé et une installation pour le salage des fromages au cours de leur fabrication.

On sait que le salage est une opération importante qui fait partie du cycle de fabrication de la quasi-totalité des fromages (sauf certaines pâtes fraîches). C'est aussi une opération délicate car il faut respecter un juste dosage et une répartition uniforme du sel sur toute la surface du fromage. En fait, la qualité du produit fini dépend pour une bonne part de la qualité du salage. Pendant cette opération, le sel (qui est du chlorure de sodium) migre à l'intérieur du fromage et facilite l'exsudation du lactosérum. Il est donc essentiel que le salage se fasse de manière uniforme sur toute la surface du fromage et que la durée pendant laquelle le fromage se charge en sel soit constante pour chaque pièce d'un même type de fromage.

Jusqu'à présent, on a utilisé trois procédés de salage. Le plus ancien est le salage à sec qui consiste à épandre du sel sec sur toutes les faces du fromage, à la main ou à l'aide de machines à saler. Le second procédé consiste à plonger les fromages dans un bain de saumure que l'on maintient à l'état saturé. Le troisième procédé consiste à pulvériser directement sur les fromages une saumure saturée.

Le premier procédé est lent et ne permet pas une répartition bien égale du sel sur toute la surface du fromage. Le second procédé nécessite des cuves importantes et entraîne une forte perte de sel. Pour saturer 1 m³ d'eau il faut y dissoudre plus de 300 kg de sel. Les fromages sont trempés dans le bain en grande quantité à la fois; ils sont posés sur des claies étagées verticalement et séparées par un faible intervalle. Il est obligatoire ensuite de les transférer sur des claies plus espacées afin de leur assurer un meilleur contact avec l'air pendant leur affinage. De plus, la saumure s'appauvrit en sel et se charge en lactosérum. Il faut donc ajouter du sel au bain et le brasser pour lui conserver son homogénéité. Malgré tout, le bain se charge d'éléments divers (acide lactique principalement) et il faut le renouveler en totalité. Le troisième procédé oblige à pulvériser la saumure sur toutes les faces de chaque fromage, ce qui fait que l'on ne peut traiter les fromages que un à un seulement en exposant directement toutes leurs faces à des jets de saumure pulvérisée.

Le procédé de l'invention se distingue des procédés connus en ce que l'on crée dans une enceinte fermée une atmosphère à brouillard salin en état de saturation et on fait séjourner les fromages dans cette enceinte pendant une durée déterminée en fonction de leur taille.

Il est avantageux d'employer une enceinte constituée par un tunnel de longueur convenable dans laquelle un transporteur chargé des fromages à traiter se déplace à la vitesse requise pour que ces derniers y séjournent pendant la durée voulue.

Le procédé de l'invention n'est nullement assimilable au procédé de pulvérisation. On crée dans l'enceinte l'atmosphère saline saturée nécessaire en projetant sous pression de la saumure saturée à travers des buses mais en prenant soin d'obtenir une atomisation assez fine pour créer dans l'atmosphère un aérosol ou un brouillard dense et stable. Il en résulte que les jets de saumure atomisée n'ont pas besoin d'être dirigés vers les fromages. Il est plutôt préférable d'éviter que les jets de saumure rencontrent les fromages. La projection ultrafine sous pression crée d'importantes turbulences qui contribuent à la propagation du brouillard dans l'enceinte.

Par suite de l'existence d'un brouillard en tous points de l'atmosphère de l'enceinte, on peut y faire circuler des fromages posés sur des claies étagées verticalement, l'ensemble reposant par exemple sur une palette déposée sur le transporteur. Une telle disposition des fromages pendant leur traitement n'est limitée que par des considérations de poids ou de stabilité. Il est tout à fait possible de prévoir sur chaque palette entraînée par le transporteur à l'intérieur du tunnel une pile de nombreux étages de claies atteignant une hauteur totale supérieure à un mètre. Chaque étage peut supporter une grande quantité de fromages, en raison inverse de leur taille, les plus gros pouvant peser 1 800 g et les plus petits 125 g, par exemple.

Les claies et les fromages sont espacés de la distance qui convient à l'opération ultérieure d'affinage, de sorte que l'on supprime le transfert des fromages entre des supports peu espacés et des supports plus espacés comme on le fait par le procédé du salage au bain. Ce transfert a été adopté en raison de la nécessité de réduire au minimum le volume du bain de trempage. Avec le procédé de l'invention, le volume de la saumure saturée servant à l'alimentation des buses est compris entre $\frac{1}{10}$ et $\frac{1}{20}$ du volume du bain classique de trempage pour la même quantité de fromage à traiter. Il est donc tout à fait admissible de prévoir un tunnel un peu plus grand en hauteur avec un volume à remplir de brouillard un peu plus important afin de supprimer l'opération de transfert et d'espacement plus grand des fromages entre le salage et l'affinage.

L'atomisation de la saumure dans l'enceinte se fait à l'aide de buses disponibles dans le commerce. La saumure saturée est projetée de préférence sous une pression de 2 à 4 bar, à un débit de 1 à 8 l/min à chaque buse. Le cône de projection n'a pas une valeur critique du moment que le brouillard se forme bien. Dans une installation réalisée pour appliquer le procédé de l'invention, on peut se servir de buses à jets en cône plein, d'un angle de 60 à 70° à l'orifice de la buse. Avec de telles buses, on prévoit une distance de 15 à 20 cm entre elles et les claies empilées en déplacement à l'intérieur du tunnel.

Le brouillard qui est créé à l'intérieur de l'enceinte fait que les faces intérieures de l'enceinte et la totalité de la surface de tout objet qui y est introduit sont rapidement recouvertes d'une couche liquide; cette couche donne naissance à un ruissellement de liquide que l'on recueille dans le fond de l'enceinte. Quand il s'agit d'un tunnel parcouru par un transporteur, le liquide de ruissellement est rassemblé dans un bac placé sous le transporteur.

De cette façon, pendant leur passage dans le tunnel, les fromages sont constamment recouvert sur toutes leurs faces d'une couche de saumure saturée toujours en cours de renouvellement.

On filtre ensuite le liquide recueilli pour en éliminer les impuretés entraînées, on le sature à nouveau pour en faire une saumure réutilisable, on le refroidit à 14° C et on l'envoie sous pression, à l'aide d'une pompe, aux buses d'atomisation. En travaillant ainsi en cycle fermé, la saumure n'a qu'un volume réduit comme on l'a déjà dit; elle est facilement maintenue propre et en état de saturation de sorte qu'on n'est pas conduit à la rejeter en totalité, ni à perdre du sel.

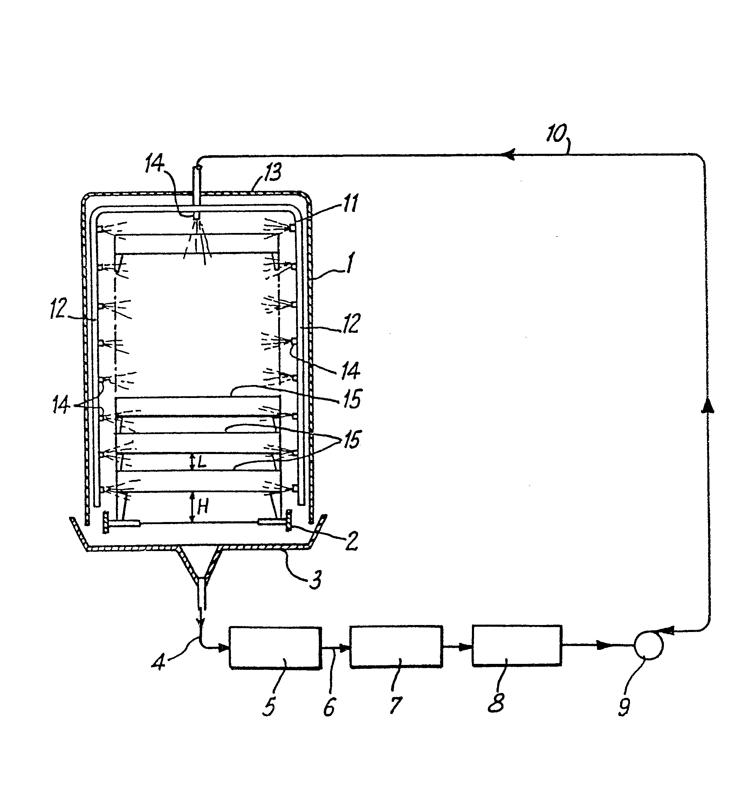

On donnera maintenant une description d'une installation mettant en œuvre le procédé de l'invention. On se reportera à la figure unique annexée qui est une représentation schématique d'une vue en coupe d'un tunnel et du circuit de saumure associé à ce dernier.

Une enceinte 1 est constituée par un tunnel à profil en U inversé à la partie inférieur duquel circule un transporteur 2 d'un type classique quelconque approprié (à chaîne, à palettes, etc.). En dessous du transporteur 2 est installé un bac 3 dont le fond est raccordé par une canalisation 4 à un filtre 5 lui-même réuni par une canalisation 6 à une cuve de resaturation 7. Après celle-ci se trouve une unité de réfrigération 8 qui est suivie d'une pompe de refoulement 9. Cette dernière est raccordée par une canalisation 10 à un ensemble de rampes 11 qui sont disposées à intervalles réguliers sur la longueur du tunnel 1.

Chaque rampe 11 est supportée à l'intérieur du tunnel 1 à proximité des faces latérales et supérieure de ce dernier, en en reproduisant le profil, avec deux branches latérales verticales 12 et une branche supérieure horizontale 13. Des buses 14 sont montées sur ces branches 12, 13; elles sont dirigées vers la zone centrale du profil mais cette disposition préférée n'est pas obligatoire ainsi qu'on l'a expliqué.

Le nombre des buses sur chaque rampe 11 et l'espacement des rampes 11 en sens longitudinal à l'intérieur du tunnel 1 dépendent en partie des conditions réelles d'utilisation, du type et de la taille des fromages à saler, de la vitesse du transporteur, etc. Il est facile de les déterminer. En outre, ces données ne s'éloignent guère des précisions que l'on fournira maintenant, uniquement à titre indicatif, tirées d'une installation réelle conforme à l'invention.

Dans cette installation, le transporteur 1 pouvait recevoir 17 étages de claies superposées 15 avec une hauteur libre H de 250 mm au-dessus du transporteur 1 pour permettre la prise par un chariot à fourche et une distance verticale L de 100 mm entre les claies. Chaque claie 15 avait une surface de 520 × 610 mm et pouvait supporter 4 à 36 fromages selon leur taille. Chaque branche latérale 12 était munie de 8 buses d'un débit de 0,9 à 1,2 l/min sous une pression de 2 à 3 bar, avec un jet conique de 60°; la branche supérieure 13 avait une seule buse centrale 14 d'un débit de 6 à 7 l/min sous une pression de 2 à 3 bar, avec un jet conique de 100°. On constate qu'il y avait donc une buse toutes les deux claies 15 sur chaque branche verticale latérale 12, soit à un espacement entre buses de 0,20 m environ; l'ensemble des buses 14 de chaque rampe 11 débitait de 21 à 26 l/min environ de saumure saturée. L'intervalle entre les buses 14 et les claies 15 était de 15 à 20 cm.

Dans ces conditions, un brouillard dense est créé dans le volume du tunnel 1 avec des rampes 11 successives espacées de 0,500 m environ. En fait, une rampe 11 fait un brouillard visible sur une distance de 1 à 2 m. Le brouillard tend à s'échapper du tunnel 1. On doit donc prévoir à l'entrée et à la sortie de ce dernier un sas à deux portes souples; de même, l'intervalle entre les bords inférieurs du tunnel 1 et les bords supérieurs du bac 3 doit être fermé par des moyens convenables.

La durée nécessaire à l'absorption de la quantité voulue de sel par les fromages est sensiblement la même que pendant le trempage dans un bain de saumure constamment agité.

Avec un transporteur se déplaçant à une vitesse de 0,35 m/min, pour des fromages de 1800 g nécessitant une durée de séjour de 90 min, le tunnel 1 doit avoir une longueur de 32 m.

Lorsqu'il s'agit de fromages de 125 g, la durée est de 15 min; la régulation pourrait se faire par modification de la vitesse du transporteur, pour une même longueur du tunnel 1.

Il est préférable, selon une variante du procédé de l'invention, de contrôler séparément l'alimentation en saumure des rampes 11 ou au moins d'une partie importante de celles qui sont à une extrémité, à l'entrée ou à la sortie. En interrompant l'alimentation en saumure d'une série de rampes 11 successives, on règle la longueur du tunnel dans laquelle règne un brouillard efficace et, par conséquent, on règle la durée du salage.

La saumure qui se condense et qui ruisselle sur toutes les surfaces à l'intérieur du tunnel 1 est traitée et régénérée dans le circuit décrit plus haut. Les opérations qu'elle subit (de filtration, de resaturation, etc.) sont connues dans le domaine du salage; il n'est pas nécessaire de les décrire ici.

Le procédé de l'invention apporte les avantages importants suivants.

Il n'y a plus de discontinuité dans la mécanisation des postes en amont et en aval du salage puisque les claies conservent le même écartement avant, pendant et après le tunnel de salage.

On contrôle aisément le temps de salage des pièces traitées, d'où la possibilité de traiter avec un même tunnel des fromages de formats très différents.

On utilise le plus petit volume de saumure défini par la relation: taux de sel dans le produit fini et vitesse de prise de sel de la pâte traitée; en conséquence le rejet de saumure usagée devient minime et ne cause plus de difficultés.

Il est possible de stocker la saumure ayant traité un certain type de pâte qui lui a imposé son pH et de la remplacer par une saumure adaptée par son pH à un autre type de pâte, ce qui est un facteur important de la régularité de la qualité du produit fini.

L'installation de salage est disponible et accessible entre deux opérations de salage. On peut donc procéder à un nettoyage soigné alors que, au contraire, une installation de saumurage en cuves n'est disponible pour le nettoyage que lors du renouvellement de la saumure, soit à des intervalles de temps allant de trois à quatre semaines à plusieurs mois suivant les types de fabrication.

## Revendications

1. Procédé de salage des fromages à partir d'une saumure saturée en sel, caractérisé en ce qu'on crée dans une enceinte fermée une atmosphère à brouillard salin en état de saturation et on fait séjourner les fromages dans cet aérosol de saumure saturée pendant une durée déterminée en fonction de leur taille.

2. Procédé de salage des fromages à partir d'une saumure saturée en sel, caractérisé en ce qu'on crée dans un tunnel fermé parcouru par un transporteur une atmosphère à brouillard salin en état de saturation et on fait déplacer les fromages par le transporteur pendant la durée nécessaire au salage à l'intérieur de ce tunnel au sein de ce brouillard.

3. Procédé selon la revendication 2, caractérisé en ce qu'on règle la durée de séjour des fromages dans le brouillard en agissant sur la vitesse du transporteur.

4. Procédé selon la revendication 2, caractérisé en ce qu'on règle la durée du séjour des fromages dans le brouillard en agissant sur la longueur de création de ce brouillard à l'intérieur du tunnel.

5. Procédé selon l'une quelconque des revendications 1 à 4, caractérisé en ce qu'on crée le brouillard dans l'enceinte fermée à l'aide de buses de projection alimentées sous pression en saumure saturée afin que celle-ci soit pulvérisée assez finement pour y créer un brouillard ou aérosol stable de saumure saturée.

6. Procédé selon la revendication 5, caractérisé en ce qu'on recueille le liquide qui ruisselle sur les faces intérieures de l'enceinte et sur la surface de tout objet qui y est introduit, on filtre ce liquide, on le resature en sel, on le refroidit à 14°C et on le réutilise pour créer dans l'enceinte l'atmosphère d'aérosol de saumure saturée.

7. Installation pour la mise en œuvre du procédé selon l'une quelconque des revendications 2 à 6, caractérisée en ce qu'elle comprend un tunnel (1) ayant à sa partie inférieure un transporteur (2), des rampes (11) munies de buses (14) espacées intérieurement le long de ce tunnel (1) et raccordées à une pompe (9) d'alimentation en saumure saturée.

8. Installation selon la revendication 7, caractérisée en ce que chaque rampe (11) a deux branches verticales latérales (12) et une branche supérieure horizontale (13), les buses (14) de ces branches étant alimentées en saumure saturée sous une pression de 2 à 4 bar, les rampes étant espacées d'une distance de 0,50 m environ.

9. Installation selon la revendication 8, caractérisée en ce que les buses (14) situées sur les branches verticales latérales (12) sont espacées de 0,20 m environ.

10. Installation selon la revendication 7, caractérisée en ce qu'une partie au moins des rampes (11) successives sont alimentées séparément de manière à permettre le contrôle de leur alimentation en saumure saturée et le réglage de la longueur de la création dans le tunnel d'un brouillard efficace.

## Claims

1. A method of salting cheeses from a pickling brine saturated with salt, characterized in that in a closed chamber an atmosphere is created of saline fog in a state of saturation and the cheeses are caused to remain in this aerosol of saturated pickling brine for a length of time determined as a function of their size.

2. A method of salting cheeses from a pickling brine saturated with salt, characterized in that in a closed tunnel traversed by a conveyor an atmosphere is created of saline fog in a state of saturation and during the length of time necessary for the salting the cheeses are caused to move by the conveyor inside the said tunnel in the heart of the said fog.

3. A method as in Claim 2, characterized in that the length of time during which the cheeses remain in the fog is regulated by acting upon the speed of the conveyor.

4. A method as in Claim 2, characterized in that the length of time during which the cheeses remain in the fog is regulated by acting upon the length of the creation of the said fog inside the tunnel.

5. A method as in any one of the Claims 1 to 4, characterized in that the fog is created in the closed chamber by means of spray nozzles fed under pressure with saturated pickling brine in order that the latter shall be atomized finely enough to create in the closed chamber a stable fog or aerosol of saturated pickling brine.

6. A method as in Claim 5, characterized in that the liquid which treckles over the inner faces of the chamber and over the surface of any object which is introduced into it is collected, the said liquid is filtered and resaturated with salt, it is cooled to 14°C and it is reused for creating in the chamber the atmosphere of an aerosol of saturated pickling brine.

7. An installation for putting into effect the method as in any one of the Claims 2 to 6, characterized in that it comprises a tunnel (1) having in the lower portion of it a conveyor (2), and distributors (11) equipped with nozzles (14) spaced along inside the said tunnel (1) and connected to a pump (9) for feeding with saturated pickling brine.

8. An installation as in Claim 7, characterized in that each distributor (11) has two vertical branches (12) at the sides and one horizontal branch (13) at the top, the nozzles (14) on these branches being fed with saturated pickling brine at a pressure of from 2 to 4 bar, the distributors being spaced at distances of about 0.50 m.

9. An installation as in Claim 8, characterized in that the nozzles (14) situated on the vertical branches (12) at the sides are spaced at about 0.20 m.

10. An installation as in Claim 7, characterized in that at least part of the successive distributors (11) are fed separately so as to enable control of their feed of saturated pickling brine and regulation of the length of the creation of an effective fog in the tunnel.

## Patentansprüche

1. Verfahren zum Einsalzen von Käse mittels einer an Salz gesättigten Lake, dadurch gekennzeichnet, dass man in einem geschlossenen Bereich eine Atmosphäre aus einem salzigen Nebel im Zustand der Sättigung erzeugt und dass man den Käse in diesem gesättigten Lakeaerosol während einer von der Käsegrösse abhängigen, vorgegebenen Zeitdauer verbleiben lässt.

2. Verfahren zum Einsalzen von Käse mittels einer mit Salz gättigten Lake, dadurch gekennzeichnet, dass man in einem von einem Förderer durchlaufenen Tunnel eine Atmosphäre aus einem salzigen Nebel im Zustand der Sättigung erzeugt und dass man den Käse durch den Förderer während der zum Einsalzen erforderlichen Zeit im Inneren des Tunnels inmitten des Nebels bewegt.

3. Verfahren nach Anspruch 2, dadurch gekennzeichnet, dass man die Dauer des Aufenthalts des Käses im Nebel durch Einwirkung auf die Geschwindigkeit des Förderers einstellt.

4. Verfahren nach Anspruch 2, dadurch gekennzeichnet, dass man die Dauer des Aufenthalts des Käses im Nebel durch Einwirkung auf die Länge der Nebelerzeugung im Tunnelinneren einstellt.

5. Verfahren nach einem der Ansprüche 1 bis 4, dadurch gekennzeichnet, dass man den Nebel in dem abgeschlossenen Bereich mit Hilfe von Sprühdüsen erzeugt, die unter Druck mit gesättigter Lake beschickt werden, damit diese genügend fein pulverisiert wird, um dort einen Nebel oder ein stabiles Aerosol aus gesättigter Lake zu erzeugen.

6. Verfahren nach Anspruch 5, dadurch gekennzeichnet, dass man die Flüssigkeit, welche von den Innenwänden des Bereichs und auf der Oberfläche eines jeden dort eingeführten Bereichs rieselt, auffängt, dass man diese Flüssigkeit filtert, sie mit Salz erneut sättigt, sie erneut auf 14° C kühlt und sie wiederverwendet, um in dem Bereich die Atmosphäre aus einem gesättigten Lakeaerosol zu erzeugen.

7. Vorrichtung zur Durchführung des Verfahrens nach einem der Ansprüche 2 bis 6, dadurch gekennzeichnet, dass sie einen Tunnel (1) umfasst, der in seinem unteren Abschnitt einen Förderer (2) aufweist, sowie Leitungen (11), die mit Sprühdüsen (14) versehen sind, die innerhalb der Länge des Tunnels (1) im Abstand voneinander liegen und an eine Speisepumpe (9) für gesättigte Lake angeschlossen sind.

8. Vorrichtung nach Anspruch 7, dadurch gekennzeichnet, dass jede Leitung (11) zwei vertikale seitliche Verzweigungen (12) und eine obere horizontale Verzweigung (13) aufweist, dass die Sprühdüsen (14) dieser Verzweigungen mit gesättigter Lake unter einem Druck von 2 bis 4 bar gespeist werden und dass die Leitungen ungefähr einen Abstand von 0,50 m aufweisen.

9. Vorrichtung nach Anspruch 8, dadurch gekennzeichnet, dass die an den vertikalen seitlichen Verzweigungen (12) angeordneten Sprühdüsen (14) ungefähr einen Abstand von 0,20 m voneinander aufweisen.

10. Vorrichtung nach Anspruch 7, dadurch gekennzeichnet, dass zumindest ein Teil der aufeinanderfolgenden Leitungen getrennt gespeist wird, um eine Kontrolle ihrer Speisung mit gesättigter Lake und die Einstellung der Länge der Erzeugung eines wirksamen Nebels im Tunnel zu gestatten.